# EUROPEAN PATENT APPLICATION

(11) **EP 4 516 817 A1**
(43) Date of publication of application: **05.03.2025**
(21) Application number: 24192258.2
(22) Date of filing: 01.08.2024
(51) Int. Cl.: C08F 2/48

(54) **AN OPTICAL TRANSPARENT ADHESIVE LAYER WITH BOTH BUBBLE RESISTANCE AND YELLOWING RESISTANCE AND ITS APPLICATION**

(30) Priority: 30.08.2023 CN 202311106789
(71) Applicant: TESA SE, 22848 Norderstedt (DE)
(72) Inventor: LI, Zhen, Suzhou (CN); LIU, Lei, Suzhou (CN); XU, Dr. Wenjing, Norderstedt (DE); WEDEL, Dr. Bastian, Norderstedt (DE); HANISCH, Dr. Mathias, Norderstedt (DE); SESSLER, Dr. Miriam, Norderstedt (DE)
(74) Representative: tesa SE

(57) **Abstract**

The present invention relates to an optical transparent adhesive layer with both bubble resistance and yellowing resistance and its application. Specifically, the present invention discloses a composition, an adhesive layer obtained by further polymerizing the composition has both excellent bubble resistance and excellent yellowing resistance, which can fully satisfy the comprehensive requirements of the market for optical transparent adhesive layers.

## Description

### TECHNICAL FIELD

The present invention relates to the field of materials, specifically to an optical transparent adhesive layer with both bubble resistance and yellowing resistance and its application.

### BACKGROUND ART

Optical transparent adhesive and the optical transparent adhesive layer prepared from it are widely used for bonding display structures. The optical transparent adhesive layer is usually set between the glass layer and the plastic layer to achieve effective bonding between the glass layer and the plastic layer. In practical applications, the optical adhesive layer needs to maintain excellent optical performance and durability in various environments. For example, when the plastic layer is placed under high temperature and humidity conditions, gas and water will be generated, or gas and/or moisture will seep into the plastic layer, resulting in bubbles and causing the display structure to float or peel off. This requires the optical transparent adhesive layer to have excellent optical properties and bubble resistance. In addition, when optical transparent adhesives are used for a long time, yellowing should be avoided to maintain the transparency and reliability of the transparent color of the optical adhesive.

Although various optical transparent adhesive layers have been disclosed in prior art, they cannot achieve a good balance between bubble resistance and yellowing resistance. Specifically, existing optical transparent adhesive layers only have bubble resistance, meaning that they are prone to yellowing during use; or they only have yellowing resistance, meaning that they cannot resist bubbles well. In other words, the existing optical transparent adhesive layers have the characteristic of poor comprehensive performance, which cannot meet the requirements of both bubble resistance and yellowing resistance.

Based on this, in order to meet the demand of market for higher quality optical transparent adhesive layers, there is an urgent need in this field to develop an optical transparent adhesive that combines excellent bubble resistance and excellent yellowing resistance, as well as an optical transparent adhesive layer prepared therefrom.

### SUMMARY OF THE INVENTION

The purpose of the present invention is to provide an optical transparent adhesive layer that combines excellent bubble resistance and excellent yellowing resistance and its application.

In the first aspect of the present invention, it provides a composition comprising the following components:

| | |
|---|---|
| (meth)acrylate monomer | 20-50 parts by weight |
| hydroxyl-containing monomer | 20-49 parts by weight |
| high Tg monomer | 20-45 parts by weight |
| first initiator | 0.001-0.2 parts by weight; |

wherein, the weight ratio of the (meth)acrylate monomer to the hydroxyl-containing monomer is 1-2;
the high Tg monomer is one high Tg monomer, and the high Tg monomer has a glass transition temperature of not less than 15°C and not more than 90°C; or
the high Tg monomer is a combination of a plurality of high Tg monomers, wherein at least one of the high Tg monomers has a glass transition temperature of not less than 15°C and not more than 90°C.

In another preferred embodiment, the high Tg monomer is selected from the group consisting of tert-butyl acrylate, trimethylcyclohexyl acrylate, N-vinylpyrrolidone, cyclohexyl acrylate, or a combination thereof.

In another preferred embodiment, the composition has one or more features selected from the group consisting of:
1) the (meth)acrylate monomer is selected from the group consisting of methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, octadecyl iso(meth)acrylate, or a combination thereof;
2) the hydroxy-containing monomer is selected from the group consisting of 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, or a combination thereof;
3) the first initiator is selected from the group consisting of Irgacure 651, Irgacure 184, Omnirad 1173, Omnirad 819, Omnirad TPO-L, Omnipol TP, or a combination thereof.

In another preferred embodiment, the composition has one or more features selected from the group consisting of:
1) based on a total weight of the composition of 100 wt%, the mass percentage of the (meth)acrylate monomer is 20-50 wt%;
2) based on a total weight of the composition of 100 wt%, the mass percentage of the hydroxyl-containing monomer is 20-49 wt%;
3) based on a total weight of the composition of 100 wt%, the mass percentage of the high Tg monomer is 20-45 wt%;
4) based on a total weight of the composition of 100 wt%, the mass percentage of the first initiator is 0.001-0.01 wt%.

In the second aspect of the present invention, it provides an adhesive layer, wherein the adhesive layer is prepared as follows:
step 1: providing the composition of the first aspect of the present invention;
step 2: initiating the composition using UV light to pre-polymerize the composition into a first adhesive slurry;
step 3: providing a second slurry mixture, the second slurry mixture comprising the following components:
   1) a first adhesive slurry;
   2) a crosslinker monomer;
   3) a second initiator, and
   4) a silane coupling agent;
step 4: the mixed second slurry mixture is defoamed under negative pressure to obtain a second adhesive slurry;
step 5: coating the second adhesive slurry obtained from step 4 on a substrate, using UV light to initiate the second adhesive slurry coated on the substrate, so that the second adhesive slurry is further polymerized and converted into a final adhesive layer.

In another preferred embodiment, the adhesive layer has a thickness of 25-1000 µm.

In another preferred embodiment, the adhesive layer has a thickness of 100-800 µm.

In another preferred embodiment, the adhesive layer has a thickness of 150-500 µm.

In the third aspect of the present invention, it provides a bonding sheet, wherein the adhesive sheet comprises, in sequence:
a first substrate layer;
the adhesive layer of the second aspect of the present invention; and
a second substrate layer.

In another preferred embodiment, the first substrate layer is a plastic layer; and/or
the second substrate layer is a glass layer.

It should be understood that in the present invention, any of the technical features specifically described above and below (such as in the Examples) can be combined with each other, so as to constitute new or preferred technical solutions. Due to space limitations, which will not be redundantly described one by one herein.

### DESCRIPTION OF FIGURES

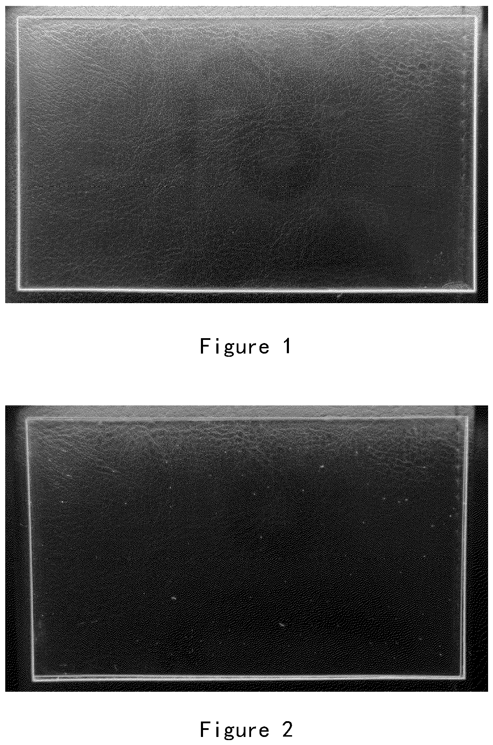

Figure 1 shows the appearance of the bubble resistance criterion as "+".
Figure 2 shows the appearance of the bubble resistance criterion as "O".

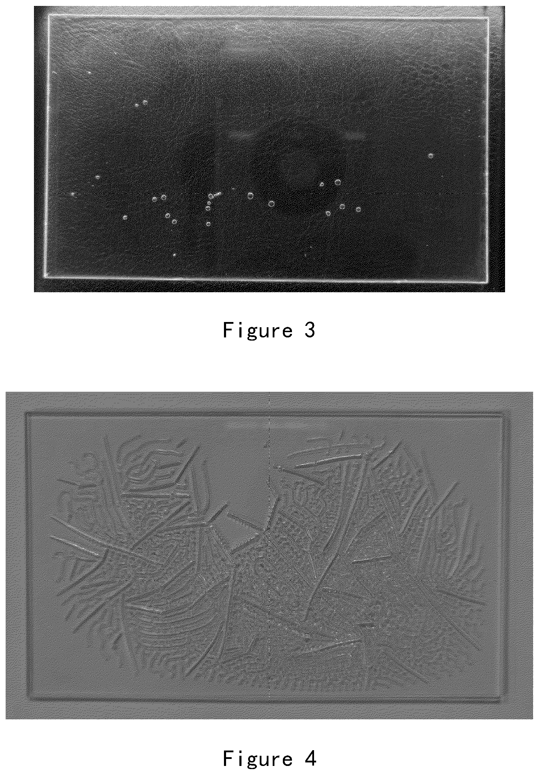

Figure 3 shows the appearance of bubbles with bubble resistance criterion of "-".
Figure 4 shows the appearance of debonding and cracking with bubble resistance criterion of "-".

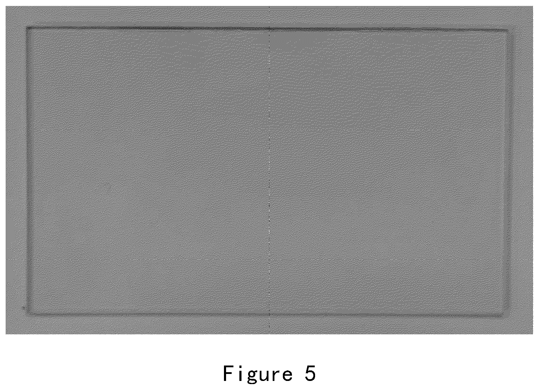

Figure 5 shows the appearance of the yellowing resistance criterion as "-".

### DETAILED DESCRIPTION OF THE INVENTION

After long-term and in-depth research, the inventor has developed an optical transparent adhesive by optimizing the adhesive formula (such as monomer selection, dosage setting, etc.), the optical transparent adhesive layer prepared therefrom has excellent bubble resistance and excellent yellowing resistance, which can fully meet the demand of market for higher quality optical transparent adhesive layers.

Specifically, by optimizing the weight ratio of (methyl) acrylate monomers and hydroxyl-containing monomers, optimizing the type and/or dosage of high Tg monomers, etc., the optical transparent adhesive layer prepared with the optical transparent adhesive obtained by the present invention simultaneously achieves excellent bubble resistance and excellent yellowing resistance, and also possesses the optical properties of general optical transparent adhesive layers (such as fogging resistance, etc.).

Furthermore, the optical transparent adhesive layer of the present invention still exhibits excellent bubble resistance and excellent yellowing resistance even at a thickness of 200-1000 µm (or 200-500 µm, 250-350 µm), which is difficult to be achieved by the existing optical transparent adhesive layers. On this basis, the inventors have completed the present invention.

### TERMS

As used herein, the terms "acrylate monomer mixture", "composition ", or "composition of the present invention" may be used interchangeably.

As used herein, the term "bubble resistance" refers to the ability of the optical transparent adhesive layer to maintain a good visual appearance for a long time (such as more than 1000 hours) and suppress defects and failures caused by external environmental changes (such as bubbles generated by gas accumulation in plastic sheets, or debonding, cracking, etc. caused by external environmental changes between plastic sheets and glass sheets) under more stringent testing and usage conditions (such as 85 °C & 85% relative humidity, or 105 °C, or UV aging).

As used herein, the term "yellowing resistance" refers to the optical transparent adhesive layer being able to maintain good optical transparency (such as haze less than 1, yellowing index less than 1) for a long time (such as more than 1000 hours) under more stringent testing and usage conditions (such as 85 °C & 85% relative humidity, or 105 °C, or UV aging).

As used herein, the term "high Tg monomer" refers to the glass transition temperature Tg of the monomer is ≥ 15 °C, preferably Tg ≥ 30 °C, more preferably ≥ 50 °C, and optimally ≥ 60 °C. The "high Tg monomer" can be one high Tg monomer or a combination of high Tg monomers, wherein at least one high Tg monomer also simultaneously satisfies Tg ≤ 90 °C, preferably ≤ 85 °C.

As used herein, the terms "containing" or "including (comprising)" may be open ended, semi-close ended and close ended. In other words, the terms also include "consisting essentially of" or "consisting of".

The English abbreviations used in this invention have the following meanings:
2-EHA: 2-ethylhexyl acrylate
N-BA: n-butyl acrylate
2-HEA: 2-hydroxyethyl acrylate
4-HBA: 4-hydroxybutyl acrylate
TBA: tert-butyl acrylate
TMCHA: 3,3,5-trimethylcyclohexyl acrylate
TBCHA: 4-tert butylcyclohexyl acrylate
CHA: Cyclohexyl acrylate
IBOA: Isobornyl acrylate
NVP: N-Vinylpyrrolidone
DMAA: N, N-dimethylacrylamide
DCPA: Dicyclopentenyl acrylate
MMA: Methyl methacrylate
Irgacure 651: 2,2-Dimethoxy-2-phenylacetophenone
Irgacure 184: 1-Hydroxycyclohexyl phenyl ketone
HDDA: 1,6-hexanediol diacrylate
EGDMA: Ethylene dimethacrylate
KBM403: 3-Glycidoxypropyltrimethoxysilane
KBM503: 3-Methacryloxypropyltrimethoxysilane

### Adhesive Layer and Its Preparation Method

The present invention provides an adhesive layer, wherein the adhesive layer is prepared as follows:
step 1: providing a mixture of acrylic monomers comprising the following components:
   1) (meth)acrylate monomer;
   2) hydroxyl-containing monomer;
   3) high Tg monomer, and
   4) first initiator;
step 2: initiating the mixture of acrylic monomers using UV light to pre-polymerize the mixture into a first adhesive slurry;
step 3: providing a second slurry mixture comprising the following components:
   1) a first adhesive slurry;
   2) a crosslinker monomer;
   3) a second initiator, and
   4) a silane coupling agent;
step 4: the mixed second slurry mixture is defoamed under negative pressure;
step 5: coating the second adhesive slurry obtained from step 4 on a substrate, using UV light to initiate the second adhesive slurry coated on the substrate, so that the second adhesive slurry is further polymerized and converted into a final adhesive layer.

In another preferred embodiment, the mixture of acrylic monomer comprises the following components:

| | | preferably | more preferably |
|---|---|---|---|
| (methyl) acrylate monomer | 20-50 parts by weight | 25-48 parts by weight | 30-45 parts by weight |
| Hydroxyl-containing monomer | 20-49 parts by weight | 22-40 parts by weight | 25-35 parts by weight |
| high Tg monomer | 20-45 parts by weight | 25-42 parts by weight | 28-40 parts by weight |
| first initiator | 0.001-0.2 parts by weight | 0.003-0.15 parts by weight | 0.005-0.1 parts by weight. |

In another preferred embodiment, the (meth)acrylate monomer is selected from the group consisting of methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, octadecyl iso(meth)acrylate, or a combination thereof.

In another preferred embodiment, the (meth)acrylate monomer is selected from the group consisting of n-butyl acrylate, 2-ethylhexyl acrylate, or a combination thereof.

In another preferred embodiment, based on a total weight of the mixture of acrylic monomer of 100wt%, the mass percentage of the (methyl) acrylate monomer is 20-50wt%, preferably 30-48wt%, and more preferably 31-45wt%.

For the hydroxyl-containing monomer, as long as it is a (methyl) acrylate with hydroxyl groups, there are no special restrictions, and examples can be listed, such as: 2-hydroxyethyl (meth)acrylate, 2-hydroxypropyl (meth)acrylate, 3-hydroxypropyl (meth)acrylate, 4-hydroxybutyl (meth)acrylate, 6-hydroxybutyl (meth)acrylate, 2-hydroxyethyl (meth)acrylate, 3-hydroxypropyl (meth)acrylate, 4-hydroxybutyl (meth)acrylate, 6-hydroxyhexyl (meth)acrylate, etc.

In another preferred embodiment, the hydroxyl-containing monomer is selected from the group consisting of 2-hydroxyethyl (meth)acrylate, 3-hydroxypropyl (meth)acrylate, 4-hydroxybutyl (meth)acrylate, 6-hydroxyhexyl (meth)acrylate, or a combination thereof.

In another preferred embodiment, the hydroxyl-containing monomer is selected from the group consisting of 2-hydroxyethyl acrylate, 4-hydroxybutyl acrylate, or a combination thereof.

In another preferred embodiment, based on a total weight of the mixture of acrylic monomer of 100wt%, the mass percentage of the hydroxyl-containing monomer is 20-49wt%, preferably 23-40wt%, and more preferably 25-35wt%.

In another preferred embodiment, the weight ratio of the (methyl)acrylate monomer to the hydroxyl-containing monomer is 1-2, preferably 1-1.8, and more preferably 1-1.5.

If the mass ratio of the (methyl)acrylate monomer to the hydroxyl-containing monomer is too small, that is, the weight fraction of the hydroxyl-containing monomer is much higher than that of the (methyl)acrylate monomer, it will cause high cohesion of the obtained adhesive, which is unfavorable for its stress release, and thus lead to debonding and cracking at high temperatures. On the contrary, if the mass ratio of the (methyl)acrylate monomer to the hydroxyl-containing monomer is too large, that is, the weight fraction of the hydroxyl-containing monomer is much lower than that of the (methyl)acrylate monomer, it will weaken the polarity of the adhesive, leading to a decrease in its binding ability with water and causing problems such as fogging.

The high Tg monomer is one high Tg monomer or a combination of high Tg monomers, and at least one of them has a glass transition temperature of not less than 15 °C and not more than 90 °C. The monomers within the Tg range, on the one hand, enhance the cohesion of the optical transparent adhesive layer and endow it with adhesion, when being applied to image display devices, especially at high temperatures, they can prevent bubbles and peeling. On the other hand, in high temperature and high humidity conditions, the adhesive will not become softer or harder, and can maintain good bubble resistance and yellowing resistance.

In another preferred embodiment, the high Tg monomer is selected from the group consisting of tert-butyl acrylate, 3,3,5-trimethylcyclohexyl acrylate, N-vinylpyrrolidone, cyclohexyl acrylate, or a combination thereof.

In another preferred embodiment, the high Tg monomer is tert-butyl acrylate.

In another preferred embodiment, the high Tg monomer is 3,3,5-trimethylcyclohexyl acrylate and N-vinylpyrrolidone.

In another preferred embodiment, the high Tg monomer will not use N-vinylpyrrolidone alone.

In another preferred embodiment, based on a total weight of the mixture of acrylic monomer of 100wt%, the mass percentage of the high Tg monomer is 20-45wt%, preferably 25-42wt%, and more preferably 29-40wt%.

In another preferred embodiment, when the high Tg monomers are 3,3,5-trimethylcyclohexyl acrylate and N-vinylpyrrolidone, the mass ratio of 3,3,5-trimethylcyclohexyl acrylate and N-vinylpyrrolidone is 3-8, preferably 4-7, and more preferably 4.5-5.

In another preferred embodiment, the first initiator and the second initiator are the same or different, independently selected from the group consisting of Irgacure 651, Irgacure 184, Omnirad 1173, Omnirad 819, Omnirad TPO-L, Omnipol TP, or a combination thereof.

In another preferred embodiment, based on a total weight of the mixture of acrylic monomer of 100wt%, the mass percentage of the first initiator is 0.001-0.01wt%, preferably 0.002-0.009wt%, and more preferably 0.004-0.009wt%.

In another preferred embodiment, the crosslinker monomer selected from the group consisting of 1,6-hexanediol diacrylate, ethylene dimethacrylate, or a combination thereof.

In another preferred embodiment, based on a total weight of the mixture of acrylic monomer of 100wt%, the mass percentage of the crosslinker monomer is 0.01-0.2wt%, preferably 0.03-0.15wt%, and more preferably 0.06-0.12wt%.

In another preferred embodiment, based on a total weight of the mixture of acrylic monomer of 100wt%, the mass percentage of the second initiator is 0.05-0.5wt%, preferably 0.08-0.3wt%, and more preferably 0.10-0.26wt%.

In another preferred embodiment, the silane coupling agent is selected from the group consisting of KBM403, KBM503, or a combination thereof.

In another preferred embodiment, based on a total weight of the mixture of acrylic monomer of 100wt%, the mass percentage of the silane coupling agent is 0.01-1wt%, preferably 0.1-0.8wt%, and more preferably 0.4-0.6wt%.

In another preferred embodiment, the initiation methods of the monomer mixture include but are not limited to methods selected from the group consisting of alpha rays, beta rays, gamma rays, neutron rays, ionizing radiation such as electron beams, or ultraviolet rays. Specifically, ultraviolet (UV) is preferred.

In another preferred embodiment, in step 2, the intensity of UV light is 0.1-5mW/cm², preferably 0.2-3mW/cm², and more preferably 0.3-1mW/cm².

In another preferred embodiment, in step 5, the intensity of UV light is 0.1-15mW/cm², preferably 0.5-10mW/cm², and more preferably 1-5mW/cm².

In another preferred embodiment, the thickness of the adhesive layer is 25-1000 µm, preferably 100-800 µm, and preferably 150-500 µm.

In another preferred embodiment, the lower limit of the thickness of the adhesive layer is selected from the group consisting of: 5, 10, 15, 20, 25, 30, 35, 40, 45, 50, 55, 60, 65, 70, 75, 80, 85, 90, 95, 100, in µm.

In another preferred embodiment, the upper limit of the thickness of the adhesive layer is selected from the group consisting of: 100, 150, 200, 250, 300, 350, 400, 450, 500, 550, 600, 650, 700, 750, 800, 850, 900, 950, 1000, in µm.

### Bonding Sheet

The present invention also provides a bonding sheet, wherein the bonding sheet comprises, in sequence:
a first substrate layer;
the adhesive layer of the present invention; and
a second substrate layer.

In another preferred embodiment, the bonding sheet is used for a display device selected from the group consisting of mobile phone screen, tablet computer, car console, car dashboard, and car intelligent display.

In another preferred embodiment, the first substrate layer is a plastic layer.

In another preferred embodiment, the material of the plastic layer is selected from the group consisting of polyethylene terephthalate (PET), polymethyl methacrylate (PMMA), polycarbonate (PC), or a combination thereof.

In another preferred embodiment, the thickness of the plastic layer is 0.1-5 millimeters, preferably 0.1-3 millimeters, more preferably 0.5-3 millimeters, and optimally 1-3 millimeters.

In another preferred embodiment, the second substrate layer is a glass layer.

In another preferred embodiment, the thickness of the glass layer is 0.1-5 millimeters, preferably 0.1-3 millimeters, more preferably 0.5-3 millimeters, and optimally 1-2 millimeters.

Compared with the prior art, the present invention has the following main advantages:
(1) The optical transparent adhesive layer prepared with the optical transparent adhesive has excellent bubble resistance and excellent yellowing resistance;
(2) The optical transparent adhesive layer prepared with the optical transparent adhesive has excellent fogging resistance, excellent touch compatibility, excellent bonding performance, easy to defoam and easy to die-cut;
(3) The optical transparent adhesive layer prepared with the optical transparent adhesive has excellent bubble resistance and excellent yellowing resistance, whether in thinner thicknesses (such as 5-200 µm, 10-100 µm, or 25-60 µm) or thicker thicknesses (such as 200-1000 µm, 250-800 µm, or 300-500 µm);
(4) The optical transparent adhesive layer prepared with the optical transparent adhesive has excellent fogging resistance, excellent touch compatibility, excellent bonding performance, easy to defoam and easy to die-cut, whether in thinner thicknesses (such as 5-200 µm, 10-100 µm, or 25-60 µm) or thicker thicknesses (such as 200-1000 µm, 250-800 µm, or 300-500 µm).

It was surprisingly found that with the specific combination of the type and/or dosage of high Tg monomers and/or the weight ratio of the (methyl)acrylate monomer to the hydroxyl-containing monomer of the present invention, the optical transparent adhesive layer prepared with the composition of the present invention demonstrates excellent bubble resistance and excellent yellowing resistance as well as excellent optical properties of general optical transparent adhesive layers e.g., excellent fogging resistance, excellent touch compatibility, excellent bonding performance, easy to defoam and easy to die-cut. The present invention and the technical effects thereof represent an unexpected, significant improvement over the prior art.

The present invention will be further illustrated below with reference to the specific examples. It should be understood that these examples are only to illustrate the invention but not to limit the scope of the invention. The experimental methods with no specific conditions described in the following examples are generally performed under the conventional conditions, or according to the instructions of manufacturer. Unless indicated otherwise, percentage and parts are calculated by weight.

Unless otherwise defined, all professional and scientific terminology used in the text have the same meanings as known to the skilled in the art. In addition, any methods and materials similar or equal with the recorded content can apply to the methods of the invention. The preferred embodiments and the materials described herein are only for demonstration purposes.

### General Raw Materials

**Table 1**

| category | specific substance | manufacturer, physical and chemical parameter |
|---|---|---|
| acrylate monomer | 2-EHA(2-ethylhexyl acrylate) | BASF (China) |
| | n-BA(n-butyl acrylate) | BASF |
| hydroxyl-containing monomer | 2-HEA(2-hydroxyethyl acrylate) | Nippon Shokubai Co., Ltd. |
| | 4-HBA(4-hydroxybutyl acrylate) | OSAKA ORGANIC CHEMISTRY INDUSTRY LTD. |
| High Tg monomer | TBA(tert-butyl acrylate), Tg=66°C | BASF (China) |
| | TMCHA(3,3,5-trimethylcyclohexyl acrylate), Tg=81°C | Suzhou Hechuang Chemical Co., Ltd. |
| | CHA(Cyclohexyl acrylate), Tg=15°C | Suzhou Hechuang Chemical Co., Ltd. |
| | IBOA(Isobornyl acrylate), Tg=97°C | Sartomer Chemicals Ltd. |
| | NVP(N-Vinylpyrrolidone), Tg=165°C | Nippon Shokubai Co., Ltd. |
| | DMAA(N, N-dimethylacrylamide), Tg=98°C | Suzhou Hechuang Chemical Co., Ltd. |
| | DCPA(Dicyclopentenyl acrylate), Tg=110°C | BASF (China) |
| | MMA(Methyl methacrylate), Tg=105°C | Aladdin Reagent Ltd. |
| initiator | Irgacure 651 | BASF (China) |
| | Irgacure 184 | BASF (China) |
| crosslinker monomer | HDDA(1,6-hexanediol diacrylate) | Sartomer Chemicals Ltd. |
| | EGDMA(Ethylene dimethacrylate) | Suzhou Hechuang Chemical Co., Ltd. |
| silane coupling agent | KBM403 | Shin-Etsu China Co. |
| | KBM503 | Shin-Etsu China Co. |

### General Test Method

### Bubble Resistance

### Accelerated aging test 1: (105 °C, 1000h)

Remove one side of the release film (polyester film coated with silicon-based release agent) from the bonding sheet (300 microns thick), then use a pressure roller to press the bonding layer onto a 1.5mm thick plastic sheet (PC), ensuring that there are no impurity particles or bubbles at the bonding interface. Then, remove the other side of the release film from the bonding sheet and place the bonding sheet in a vacuum bonding chamber. The bonding sheet is facing upwards and covered with a 1mm thick glass sheet before vacuum bonding. The bonding condition is below 200Pa for 10 seconds. Subsequently, the obtained laminates were subjected to defoaming at 40 °C, 0.5 megapascals, for a duration of 30 minutes. Place the obtained laminates under conditions of 25 °C and 50% relative humidity for 24 hours, then place them in an oven at 105 °C, with intervals of 3 hours/24 hours/72 hours and 1000 hours. Observe under a microscope whether there are bubbles and visible failures such as cracking and debonding in the laminates.

### Accelerated aging test 2: (85 °C/85% RH, 1000h)

The bonding method of the laminates is the same as above. The placement condition is to place the obtained laminates at 25 °C and 50% relative humidity for 24 hours, and then place it in a temperature and humidity box at 85 °C and 85% relative humidity.

Judgment criteria:
"+" indicates no visible bubbles (larger than 25 microns in size) or any other failures under a developing lamp or microscope;
"o" indicates the presence of visible bubbles (ranging in size from 25 microns to 70 microns) under a developing lamp or microscope, but no cracking or debonding failure;
"-" indicates visible bubbles or other cracking and debonding failures to the naked eye;

### Yellowing Resistance

### Accelerated aging test 1: (105°C, 1000h)

Remove one side of the release film (polyester film coated with silicon-based release agent) from the bonding sheet (300 microns thick), then use a pressure roller to press the bonding layer onto a 1mm thick glass sheet, ensuring that there are no impurity particles or bubbles at the bonding interface. Then, remove the other side of the release film from the bonding sheet and place the bonding sheet in a vacuum bonding chamber. The bonding sheet is facing upwards and covered with a 1mm thick glass sheet before vacuum bonding. The bonding condition is below 200Pa for 10 seconds. Subsequently, the obtained laminates were subjected to defoaming at 40°C, 0.5 megapascals, for a duration of 30 minutes. Place the obtained laminates at 25°C and 50% relative humidity for 24 hours, then place them in an oven at 105°C, with intervals of 250 hours/500 hours/and 1000 hours. Measure the Δb value using the BYK spectro-guide (purchased from BYK-GARDNER GMBH, GERMANY). The BYK spectro-guide is calibrated on a white slate using a blank glass slide.

### Accelerated aging test 2: (85°C/85% RH, 1000h)

The bonding method of the laminates is the same as above. The placement condition is to place the obtained laminates at 25°C and 50% relative humidity for 24 hours, and then place it in a temperature and humidity box at 85°C and 85% relative humidity for experimentation and measure the Δb value.

### Accelerated aging test 3: Q-UV

The bonding method of the laminates is the same as above. The placement condition is to place the obtained laminated material at 25°C and 50% relative humidity for 24 hours, and then place it in a UV aging box and subjected to UV aging according to the standard of DIN 75220 Z-IN 1. The Δ b value is measured after completion.

Judgment criteria:
"+" indicates the measured yellowing value Δb<1;
"o" indicates the measured yellowing value 1≤Δb<2;
"-" indicates that the measured yellowing value Δb≥2 or there is other visible appearance failure (such as bubbles, cracks, etc.);

### Fogging Resistance

Remove one side of the release film (polyester film coated with silicon-based release agent) from the bonding sheet (300 microns thick), then use a pressure roller to press the bonding layer onto a 1mm thick glass sheet, ensuring that there are no impurity particles or bubbles at the bonding interface. Then, remove the other side of the release film from the bonding sheet and place the bonding sheet in a vacuum bonding chamber. The bonding sheet is facing upwards and covered with a 1mm thick glass sheet before vacuum bonding. The bonding condition is below 200Pa for 10 seconds. Subsequently, the obtained laminates were subjected to defoaming at 40 °C, 0.5 megapascals, for a duration of 30 minutes. Place the obtained laminates under conditions of 25°C and 50% relative humidity for 24 hours, then place them in a temperature and humidity chamber at 85°C and 85% relative humidity, with intervals of 250 hours/500 hours/and 1000 hours. Use BYK haze-gard plus (purchased from BYK-GARDNER GMBH, GERMANY) to measure haze, i.e. haze value, and transmittance T.

Generally, the haze value should be less than 1 and the transmittance T should be greater than 99%.

### Thickness

The thickness was measured by subtracting the upper and lower layers of release film (polyester film coated with silicon-based release agent) using a PEACOCK UPLIGHT DIAL GAUGE thickness gauge.

It should be understood that the thickness of the optical transparent adhesive layer of the present invention is measured in a dry state.

### Peeling Force

The peeling force is measured at a temperature of 23°C±1°C and a relative humidity of 50%±5%. Cut the sample into a width of 20mm and adhere it to glass and PC substrates respectively. Clean and adjust the substrate before measurement. Then, the side facing away from the test substrate is lined with a plastic film of 50 µm or other thickness, such as PET or PVC, to prevent stretching or deformation of the adhesive layer of the test sample during the testing process. Then, the test sample is rolled onto the substrate in the following way: use a 4kg roller to roll back and forth on the tape at a speed of 10m/min for 5 times, and after rolling treatment, place the sample under 25°C and 50% relative humidity conditions for 24 hours. Then, insert the test sample into the Zwick tensile testing machine to conduct peeling force testing at an angle of 180°. Measure the peeling force at a speed of 300mm/min. The test results of each sample are represented by the average of three measurement results (N/cm).

### Example 1 Adhesive Layer 1

A mixture of acrylate monomers, hydroxyl-containing monomers, high Tg monomers, and the first initiator was prepared according to the materials and dosages listed in Table 2. UV radiation was applied to initiate pre-polymerization of the mixture. UV radiation conditions: wavelength 365nm LED, intensity 0.5mW/cm², irradiation time 20 minutes, to pre-polymerize it into the first adhesive slurry with a viscosity of 3000cps.

The crosslinking agent monomer, second initiator, and silane coupling agent were mixed into the first adhesive slurry, and then the mixed second slurry was defoamed under negative pressure conditions. After defoaming, the second adhesive slurry was coated on the PET release film with a coating thickness of 300 µm. UV radiation was applied to trigger further polymerization of the second adhesive slurry coated on the release film and convert it into the final adhesive layer. UV radiation conditions: LED with a wavelength of 365nm, intensity of 5mW/cm², and irradiation time of 10 minutes. The final thickness of adhesive layer 1 is 300 µm. The performance of adhesive layer 1 is shown in Table 4.

It should be understood that there are no special restrictions on the order of addition of each substance in the above mixture; There are no special restrictions on the mixing method of the first adhesive slurry and the second slurry.

### Example 2 Adhesive Layer 2

The difference with Example 1 is that the coating thickness on the release film is 200 µm, and the final thickness of the adhesive layer 2 is 200 µm.

The performance of the final adhesive layer 2 is shown in Table 4.

### Example 3 Adhesive Layer 3

The difference with Example 1 is that the coating thickness on the release film is 100 µm, and the final thickness of the adhesive layer 3 is 100 µm.

The performance of the final adhesive layer 3 is shown in Table 4.

### Example 4 Adhesive Layer 4

The difference with Example 1 is that the amount of acrylate monomer is 41 parts by weight, the amount of hydroxyl-containing monomer is 29 parts by weight, and the mass ratio of acrylate monomer to hydroxyl-containing monomer is 1.4:1.

The final thickness of adhesive layer 4 is 300 µm, and its performance is shown in Table 4.

### Example 5 Adhesive Layer 5

The difference with Example 1 is that the amount of acrylate monomer is 45 parts by weight, the amount of hydroxyl-containing monomer is 25 parts by weight, and the mass ratio of acrylate monomer to hydroxyl-containing monomer is 1.8:1.

The final thickness of adhesive layer 5 is 300 µm, and its performance is shown in Table 4.

### Example 6 Adhesive Layer 6

The difference with Example 1 is that the high Tg monomer is 3,3,5-trimethylcyclohexyl acrylate.

The final thickness of adhesive layer 6 is 300 µm, and its performance is shown in Table 4.

### Example 7 Adhesive Layer 7

The difference with Example 1 is that the high Tg monomer is cyclohexyl acrylate. The final thickness of adhesive layer 7 is 300 µm, and its performance is shown in Table 4.

### Example 8 Adhesive Layer 8

The difference with Example 1 is that the amount of high Tg monomer is 40 parts by weight, the amount of acrylate monomer is 31 parts by weight, the amount of hydroxyl-containing monomer is 29 parts by weight, and the mass ratio of acrylate monomer to hydroxyl-containing monomer is 1.07:1.

The final thickness of adhesive layer 8 is 300 µm, and its performance is shown in Table 4.

### Example 9 Adhesive Layer 9

The difference with Example 1 is that the acrylate monomer is n-butyl acrylate. The final thickness of adhesive layer 9 is 300 µm, and its performance is shown in Table 4.

### Example 10 Adhesive Layer 10

The difference with Example 1 is that the hydroxyl-containing monomer is hydroxyethyl acrylate.

The final thickness of adhesive layer 10 is 300 µm, and its performance is shown in Table 4.

### Example 11 Adhesive Layer 11

The high Tg monomer is a combination of 3,3,5-trimethylcyclohexyl acrylate and N-vinylpyrrolidone. Based on the materials and amounts listed in Table 2, an adhesive layer 11 with a final thickness of 300 µm was obtained using the preparation method of Example 1.

The performance is shown in Table 4.

### Comparative Example 1 Adhesive layer C1

The difference with Example 1 is that the amount of acrylate monomer is 48 parts by weight, the amount of hydroxyl-containing monomer is 23 parts by weight, and the mass ratio of acrylate monomer to hydroxyl-containing monomer is 2.1:1.

The final thickness of the adhesive layer C1 is 300 µm, and its performance is shown in Table 4.

### Comparative Example 2 Adhesive layer C2

The difference with Example 1 is that the high Tg monomer is DMAA.

The final thickness of the adhesive layer C2 is 300 µm, and its performance is shown in Table 4.

### Comparative Example 3 Adhesive layer C3

The difference with Example 1 is that the high Tg monomer is IBOA.

The final thickness of the adhesive layer C3 is 300 µm, and its performance is shown in Table 4.

### Comparative Example 4 Adhesive layer C4

The difference with Example 1 is that the high Tg monomer is DCPA.

The final thickness of the adhesive layer C4 is 300 µm, and its performance is shown in Table 4.

### Comparative Example 5 Adhesive layer C5

The difference with Example 1 is that the dosage of high Tg monomer is 50 parts by weight.

The final thickness of the adhesive layer C5 is 300 µm, and its performance is shown in Table 4.

### Comparative Example 6 Adhesive layer C6

The difference with Example 1 is that the amount of high Tg monomer is 10 parts by weight.

The final thickness of the adhesive layer C6 is 300 µm, and its performance is shown in Table 4.

### Comparative Example 7 Adhesive Layer C7

The process as shown in Example 1 of CN102453445A was repeated to obtain an adhesive layer C7, the adhesive composition comprised 63 parts by weight of 2-ethylhexyl acrylate (2EHA), 15 parts by weight of N-vinyl-2-pyrrolidone (NVP), 9 parts by weight of methyl methacrylate (MMA), and 13 parts by weight of 2-hydroxyethyl acrylate (HEA). The polymerization method was solvent based polymerization, with a polymerization solvent of 133 parts by weight of ethyl acetate, a polymerization initiator of 0.2 parts by weight of 2,2'-azodiisobutyronitrile, a crosslinker agent of 0.3 parts by weight of isocyanate based crosslinker agent (TAKENATE Dll0N), a polyol (EDP-300) obtained by adding epoxy propane to ethylenediamine with a crosslinking promoter of 0.2 parts by weight, and a silane coupling agent KBM-403 of 0.15 parts by weight. Finally, an adhesive layer with a thickness of 50 µm was prepared.

### Comparative Example 8 Adhesive Layer C8

The difference with Comparative Example 7 is that the coating thickness was changed to 100 µm, and after drying, the slurry with a thickness of 100 µm was coated again, coated for a total of 3 times, resulting in an adhesive layer C8 with a final thickness of 300 µm. The performance is shown in Table 4.

### Comparative Example 9 Adhesive Layer C9

The adhesive layer C9 was prepared according to the material and dosage shown in Example 18 of CN102164745A, but the coating thickness of the slurry was changed to 300 µm for comparison with examples of the present invention.

**Table 2**

| Adhesive composition (by weight) | | Exampl e 1 | Exampl e 2 | Exampl e 3 | Exampl e 4 | Exampl e 5 | Exampl e 6 | Exampl e 7 | Exampl e 8 | Exampl e 9 | Exampl e 10 | Exampl e 11 |
|---|---|---|---|---|---|---|---|---|---|---|---|---|
| Acrylate monomer | 2-EHA | 36 | 36 | 36 | 41 | 45 | 36 | 36 | 31 | | 36 | 41 |
| | BA | | | | | | | | | 36 | | |
| Hydroxyl-containing monomers | 2-HEA | | | | | | | | | | 35 | 30 |
| | 4-HBA | 35 | 35 | 35 | 29 | 25 | 35 | 35 | 29 | 35 | | |
| High Tg monomer | TBA | 29 | 29 | 29 | 30 | 30 | | | 40 | 29 | 29 | |
| | TMCHA | | | | | | 29 | | | | | 24 |
| | NVP | | | | | | | | | | | 5 |
| | CHA | | | | | | | 29 | | | | |
| First initiator | Irgacure 651 | 0.007 | 0.007 | 0.007 | 0.007 | 0.007 | 0.008 | 0.009 | 0.005 | 0.006 | 0.006 | 0.007 |
| Crosslinke r monomer | HDDA | 0.06 | 0.06 | 0.06 | 0.06 | 0.06 | | | 0.06 | 0.06 | 0.06 | 0.08 |
| | EGDMA | | | | | | 0.12 | 0.12 | | | | |
| Second initiator | Irgacure 184 | 0.15 | 0.15 | 0.15 | 0.15 | 0.15 | 0.1 | 0.1 | 0.22 | 0.12 | 0.2 | 0.26 |
| silane coupling agent | KBM 403 | 0.6 | 0.6 | 0.6 | 0.6 | 0.6 | 0.5 | 0.5 | 0.4 | 0.6 | 0.6 | 0.5 |

**Table 3**

| Adhesive composition (by weight) | | Comparativ e Example 1 | Comparativ e Example 2 | Comparativ e Example 3 | Comparativ e Example 4 | Comparativ e Example 5 | Comparativ e Example 6 | Comparativ e Example 7 | Comparativ e Example 8 | Comparativ e Example 9 |
|---|---|---|---|---|---|---|---|---|---|---|
| Acrylate monomer | 2-EHA | 48 | 36 | 36 | 36 | 26 | 46 | 63 | 63 | 60 |
| Hydroxyl-containing monomers | 2-HEA | | | | | | | 13 | 13 | 20 |
| | 4-HBA | 23 | 35 | 35 | 35 | 24 | 44 | | | |
| High Tg monomer | TBA | 29 | | | | 50 | 10 | | | |
| | NVP | | | | | | | 15 | 15 | |
| | DMAA | | 29 | | | | | | | |
| | IBOA | | | 29 | | | | | | 20 |
| | DCPA | | | | 29 | | | | | |
| | MMA | | | | | | | 9 | 9 | |
| First initiator | Irgacure 651 | 0.007 | 0.007 | 0.007 | 0.007 | 0.007 | 0.007 | - | - | 0.04 |
| Crosslinke r monomer | HDDA | 0.06 | 0.06 | 0.06 | 0.06 | 0.06 | 0.06 | - | - | 0.1 |
| Second initiator | Irgacure 184 | 0.15 | 0.15 | 0.15 | 0.15 | 0.15 | 0.15 | - | - | |
| | Irgacure 651 | | | | | | | | | 0.11 |
| silane coupling agent | KBM 403 | 0.6 | 0.6 | 0.6 | 0.6 | 0.6 | 0.6 | 0.15 | 0.15 | 0.1 |

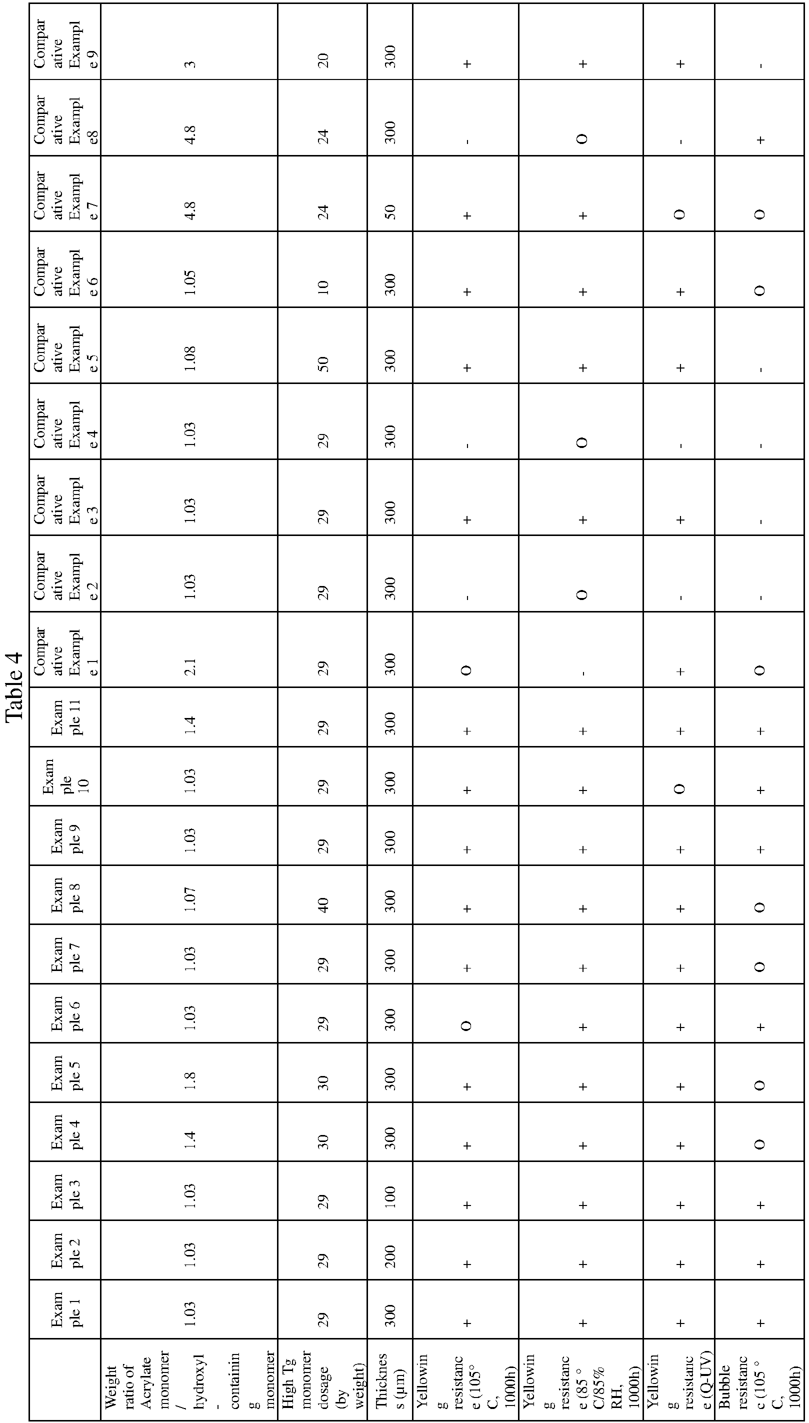

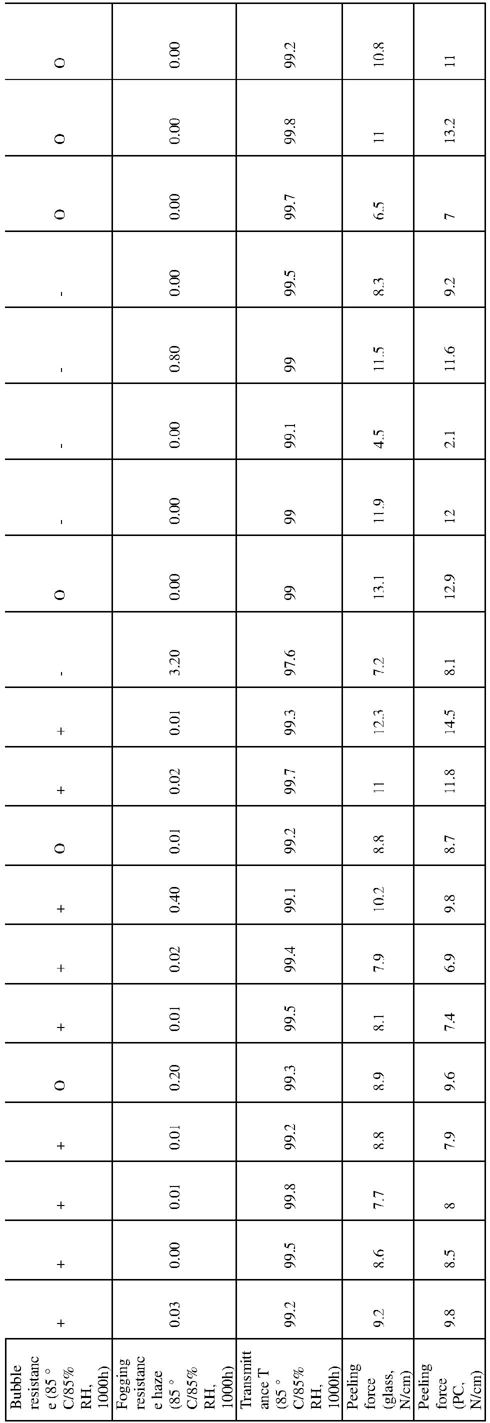

The performance test results are analyzed as follows:
1) It can be seen from Examples 1-3 that the adhesive and the adhesive layer obtained by the present invention all have excellent comprehensive performance, whether they are made into thinner, medium, or thicker thicknesses.
2) Examples 4-5 are other examples that comply with the dosage range of acrylate monomers and hydroxyl-containing monomers of the present invention, and the obtained adhesive and the adhesive layer all have excellent comprehensive performance.
3) Examples 6-8 are other examples that comply with the high Tg monomer selection and dosage range described in the present invention, and the obtained adhesive and the adhesive layer all have excellent comprehensive performance.
4) Examples 9-11 are other examples that comply with the selection of acrylate monomers and hydroxyl-containing monomers of the present invention. The obtained adhesive layer and the bonding sheet prepared from the adhesive layer all have excellent comprehensive performance.
5) the weight ratio of acrylate monomer to hydroxyl-containing monomers in Comparative Example 1 exceeds the range defined by the present invention, the obtained adhesive layer appears fogging under high temperature and high humidity conditions, and the bubble resistance performance of the adhesive sheet prepared from the adhesive layer decreases, resulting in visible bubbles.
6) Comparative Examples 2-4 used other high Tg monomers which are common in this field, but their Tg exceeds the range defined by the present invention. The balance of yellowing resistance and bubble resistance cannot be well achieved by the adhesive layer obtained by using these high Tg monomers and the bonding sheet prepared therefrom.
7) In Comparative Example 5, the amount of high Tg monomer used is higher than the range defined by the present invention. It can be seen that, when the amount of high Tg monomer is higher, the obtained adhesive becomes harder due to the influence of Tg, resulting in a decrease in viscoelasticity. At high temperatures and high humidity, the occurrence of debonding and other failures can be attributed to that it cannot comply with the thermal expansion of the adhesive sheet.
8) In Comparative Example 6, the dosage of high Tg monomer is lower than the range defined by the present invention. It can be seen that, when the amount of high Tg monomer is lower, the obtained adhesive becomes softer due to the influence of Tg at high temperatures, resulting in the inability to overcome the gas escaping from the plastic sheet or the moisture passing through the plastic sheet at high temperatures and high humidity, thereby forming more obvious bubbles and causing appearance failure.
9) For the prior art Comparative Example 7, the bonding sheet has a thickness of 50 µm. From the test results, it has excellent yellowing resistance, and its bubble resistance is also acceptable (visible bubbles under the microscope). However, when the coating thickness is changed to produce an adhesive layer with the same thickness as the present invention (300 µm) (as shown in Comparative Example 8), the yellowing resistance is significantly reduced due to the superposition effect of thickness on color. Therefore, the adhesive layer of the present invention has superior comprehensive performance.
10) Comparative Example 9 adopts the material and dosage of another optimal example of existing technology, but changes the scraping thickness of the slurry to 300 µm for comparison with the present example. This scheme cannot have excellent bubble resistance under the same thickness, that is, it cannot have both excellent yellowing resistance and excellent bubble resistance.

The results show that the adhesive layer obtained by the present invention can maintain excellent yellowing resistance and good transmittance in both high temperature, high temperature and high humidity, and UV aging. From a reliability perspective, whether under high temperature or high temperature and high humidity conditions, the bonding sheet composed by this adhesive layer can suppress the bubbles generated by the plastic sheet or the bubbles generated by moisture passing through the plastic sheet. It can also comply with the thermal expansion effect of the plastic sheet in the testing environment, so as not to debonding or crack, thus achieving good appearance performance.

All literatures mentioned in the present invention are incorporated by reference herein, as though individually incorporated by reference. Additionally, it should be understood that after reading the above teaching, many variations and modifications may be made by the skilled in the art, and these equivalents also fall within the scope as defined by the appended claims.

## Claims

1. A composition **characterized in that** the composition comprises the following components:
| | |
|---|---|
| (meth)acrylate monomer | 20-50 parts by weight |
| hydroxyl-containing monomer | 20-49 parts by weight |
| high Tg monomer | 20-45 parts by weight |
| first initiator | 0.001-0.2 parts by weight; |
wherein the weight ratio of the (meth)acrylate monomer to the hydroxyl-containing monomer is 1-2;
the high Tg monomer is one high Tg monomer, and the high Tg monomer has a glass transition temperature of not less than 15°C and not more than 90°C; or
the high Tg monomer is a combination of a plurality of high Tg monomers, wherein at least one of the high Tg monomers has a glass transition temperature of not less than 15°C and not more than 90°C.

2. The composition of claim 1, **characterized in that** the high Tg monomer is selected from the group consisting of tert-butyl acrylate, trimethylcyclohexyl acrylate, N-vinylpyrrolidone, cyclohexyl acrylate, or a combination thereof.

3. The composition of claim 1, **characterized in that** the composition has one or more features selected from the group consisting of:
1) the (meth)acrylate monomer is selected from the group consisting of methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, octadecyl iso(meth)acrylate, or a combination thereof;
2) the hydroxy-containing monomer is selected from the group consisting of 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, or a combination thereof;
3) the first initiator is selected from the group consisting of Irgacure 651, Irgacure 184, Omnirad 1173, Omnirad 819, Omnirad TPO-L, Omnipol TP, or a combination thereof.

4. The composition of claim 1, **characterized in that** the composition has one or more features selected from the group consisting of:
1) based on a total weight of the composition of 100 wt%, the mass percentage of the (meth)acrylate monomer is 20-50 wt%;
2) based on a total weight of the composition of 100 wt%, the mass percentage of the hydroxyl-containing monomer is 20-49 wt%;
3) based on a total weight of the composition of 100 wt%, the mass percentage of the high Tg monomer is 20-45 wt%;
4) based on a total weight of the composition of 100 wt%, the mass percentage of the first initiator is 0.001-0.01 wt%.

5. An adhesive layer **characterized in that** the adhesive layer is prepared as follows:
step 1: providing the composition of claim 1;
step 2: initiating the composition using UV light to prepolymerize the composition into a first adhesive slurry;
step 3: providing a second slurry mixture, the second slurry mixture comprising the following components:
1) a first adhesive slurry;
2) a crosslinker monomer;
3) a second initiator, and
4) a silane coupling agent;
step 4: the mixed second slurry mixture is defoamed under negative pressure to obtain a second adhesive slurry;
step 5: coating the second adhesive slurry obtained from step 4 on a substrate, using UV light to initiate the second adhesive slurry coated on the substrate, so that the second adhesive slurry is further polymerized and converted into a final adhesive layer.

6. The adhesive layer of claim 5, **characterized in that** the adhesive layer has a thickness of 25-1000 µm.

7. The adhesive layer of claim 5, **characterized in that** the adhesive layer has a thickness of 100-800 µm.

8. The adhesive layer of claim 5, **characterized in that** the adhesive layer has a thickness of 150-500 µm.

9. A bonding sheet **characterized in that** the bonding sheet comprises, in sequence:
a first substrate layer;
the adhesive layer of claim 5; and
a second substrate layer.

10. The bonding sheet of claim 9, **characterized in that** the first substrate layer is a plastic layer; and/or the second substrate layer is a glass layer.
